(19) Europäisches Patentamt / European Patent Office / Office européen des brevets

(11) **EP 1 615 812 B1**

(12) **EUROPÄISCHE PATENTSCHRIFT**

(45) Veröffentlichungstag und Bekanntmachung des Hinweises auf die Patenterteilung:
**12.09.2007 Patentblatt 2007/37**

(21) Anmeldenummer: **04741452.9**

(22) Anmeldetag: **06.04.2004**

(51) Int Cl.:
***B60T 8/40*** *(2006.01)*    ***B60T 8/44*** *(2006.01)*

(86) Internationale Anmeldenummer:
**PCT/EP2004/050459**

(87) Internationale Veröffentlichungsnummer:
**WO 2004/089712 (21.10.2004 Gazette 2004/43)**

(54) **HYDRAULISCHE FAHRZEUGBREMSANLAGE**

HYDRAULIC VEHICLE BRAKING SYSTEM

SYSTEME DE FREINAGE HYDRAULIQUE DE VEHICULE

(84) Benannte Vertragsstaaten:
**DE FR IT**

(30) Priorität: **10.04.2003 DE 10316750**

(43) Veröffentlichungstag der Anmeldung:
**18.01.2006 Patentblatt 2006/03**

(73) Patentinhaber: **Continental Teves AG & Co. oHG 60488 Frankfurt (DE)**

(72) Erfinder:
• **FENNEL, Helmut 65812 Bad Soden (DE)**
• **WOYWOD, Jürgen 64546 Mörfelden (DE)**
• **GRONAU, Ralph 35083 Wetter (DE)**
• **BURKHARD, Dieter 55411 Bingen-Büdelheim (DE)**

(56) Entgegenhaltungen:
**EP-A- 1 180 460         DE-A- 3 124 755
DE-A- 10 244 375**

**Beschreibung**

Die Erfindung betrifft eine hydraulische Fahrzeugbremsanlage nach dem Oberbegriff des Anspruchs 1.

Im Zuge neuer Motorentechnik, wie z.B. Diesel, Benzin-Direkteinspritzer oder Elektroantriebe, ist eine hinreichende Unterdruckversorgung zur Bremskraftunterstützung immer seltener gegeben. Dies erfordert Bremsanlagen mit einer aktiven hydraulischen Bremskraftunterstützung oder mit einer zusätzlichen Vakuumpumpe zum Betrieb eines Vakuumbremskraftverstärkers.

Ferner ist beim Vakuumbremskraftverstärker grundsätzlich sein relativ großes Bauvolumen nachteilig. Probleme treten auch beim Packaging auf, da sein Einbauort nur schwer zu variieren ist.

Daher besteht ein Bedarf an einfachen Bremssystemen mit aktiver hydraulischer Bremskraftunterstützung bzw. mit hydraulischen Bremskraftverstärkern.

Systeme mit aktiver hydraulischer Bremskraftunterstützung, unterstützen den Fahrer bei der Bremspedal-Betätigung mittels einer ansteuerbaren Hydraulikpumpe (OHB-Systeme), z.B. der ABS-Rückförderpumpe. Diese Systeme erhöhen den Aussteuerpunkt eines Vakuumbremskraftverstärker, ohne ihn zu ersetzen. Eine unzureichende Unterdruckversorgung oder Dimensionierung des Vakuumbremskraftverstärkers kann so kompensiert werden.

Derartige Systeme können aber im Komfortbereich zu Nachteilen führen. In manchen Situationen stellt sich ein Pedalgefühl ein, welches negativ von einer "gewohnten" Vakuumbremskraftverstärker-Unterstützung abweicht.

Andererseits sind bekannte hydraulische Bremskraftverstärker durch einen hohen Bauaufwand kompliziert und teuer. Sie erfordern zusätzliche Komponenten, um aktiv Druck aufbauen zu können. Dies gilt im besonderen Maß für Brake-by-wire-Systeme, wie elektrohydraulische Bremsanlagen (EHB).

Aufgabe der Erfindung ist es, eine hydraulische Fahrzeugbremsanlage mit einem technisch einfachen, entkoppelten hydraulischen Bremsdruckgeber zu schaffen. Vorzugsweise sollte diese mit geringem Mehraufwand in eine bestehende hydraulische Anlage zu integrieren sein.

Erfindungsgemäß wird diese Aufgabe durch die Merkmale des unabhängigen Patentanspruchs gelöst. Bevorzugte Ausgestaltungen sind in den Unteransprüchen angegeben.

Basis der Erfindung ist eine aus der nach dem Prioritätstag der vorliegenden Anmeldung veröffentlichten deutschen Patentanmeldung DE 102 44 375 A1 bekannte hydraulische Fahrzeugbremsanlage mit einem einfachen hydraulischen Verstärker. Diese weist einen von einer Bremsbetätigungseinrichtung, insbesondere ein Bremspedal, betätigbaren Bremsdruckgeber auf, der über eine hydraulische Leitung mit einer Radbremse des Fahrzeugs verbindbar ist, wobei vorgesehen ist, dass der Bremsdruckgeber im wesentlichen aus einem Hauptbremszylinder und einem vorgeschalteten hydraulischen Verstärker besteht, der eine im wesentlichen koaxial zum Hauptbremszylinder angeordnete Verstärkungskammer und einen darin angeordneten Verstärkerkolben aufweist, der in Kraftabgaberichtung über ein Betätigungselement mit einem Hauptbremszylinderkolben wirkverbunden ist und der zwecks Bremskraftverstärkung mit einem hydraulischen Druck einer Fremddruckquelle beaufschlagbar ist, die mit dem hydraulischen Verstärker verbunden ist über eine Leitung, in der ein analoges bzw. analogisiertes Regelventil angeordnet ist. Bei diesem System ist der Bremsdruckgeber mit einem Druckmittelvorratsbehälter verbunden über eine Leitung, in der ein weiteres analoges bzw. analogisiertes Regelventil angeordnet ist.

Aus der EP 1 180 460 A2 ist eine Fahrzeugbremsanlage mit den Merkmalen des Oberbegriffes des Anspruchs 1 bekannt .

Ein Nachteil der bekannten Systeme besteht darin, dass die zunehmenden Komfortansprüche sowie einige Zusatzfunktionen, z.B. regeneratives Bremsen bei Hybrid- oder Elektroantrieben, nur durch ein vom Pedal entkoppeltes Bremssystem (Brake-by-wire-System) erfüllt werden können.

Die Aufgabe wird erfindungsgemäß bei einer hydraulischen Fahrzeugbremsanlage nach dem Oberbegriff des Patentanspruchs 1 dadurch gelöst, dass die Pumpe eingangsseitig mit einer von den Radbremsen zum Hauptbremszylinder führenden Rücklaufleitung verbunden ist und ausgangsseitig über eine Verzweigungsstelle mit den Radbremsen des Fahrzeugs oder mit dem Hochdruckspeicher verbindbar ist, wobei in der Leitung zwischen der Pumpe und dem Hochdruckspeicher und in der Leitung zwischen der Pumpe und den Radbremsen jeweils ein ansteuerbares Ventil angeordnet ist, die mittels einer elektronischen Steuer- und Regeleinheit zur Bremsdruckregelung oder zum Aufbau eines hydraulischen Drucks in dem Hochdruckspeicher geregelt bzw. gesteuert werden.

Dadurch ist es möglich, mit einem geringen Bauaufwand und damit geringen Kosten aktiv Bremsdruck aufzubauen und diesen nach Maßgabe einer entkoppelten Bremsbetätigungseinrichtung oder einer Vorgabe durch das Bremsenregelungssystem, wie z.B. im Fall eines automatischen Bremseneingriffs durch eine Abstands- und Folgeregelung oder bei einem ESP-Bremseneingriff, einzusteuern (Brake-by-wire-System). Die Vorteile eines Brake-by-wire-Systems sind daher nutzbar.

Des weiteren ergeben sich Vorteile durch den geschlossenen Aufbau des Systems. Es entsteht, im Gegensatz zu anderen Bremssystemen, bei denen das Volumen zur Bremsdruckerzeugung im Grundsatz aus einem Hochdruckspeicher zur Verfügung gestellt und dieses in den Vorratsbehälter abgelassen wird, kein Problem in der Volumenbilanz der Druckflüssigkeit.

Die Bremsbetätigungseinrichtung ist im "Normalfall", d.h ohne Systemfehler, von dem Bremsdruckgeber und damit der hydraulischen Verbindung mit einer Radbremse des Fahrzeugs entkoppelt. Nur im Fehlerfall, insbesondere bei einem Ausfall oder einer Störung der elektronisch ansteuerbaren Fremddruckquelle, wird die Bremsbetätigungseinrichtung über den hydraulischen Bremsdruckgeber hydraulisch an die Radbremsen gekoppelt (hydraulischer Durchgriff).

Es werden analoge bzw. analogisierte Ventile eingesetzt, die mittels einer elektrischen bzw. elektronischen Fremdansteuerung vorzugsweise alle Stellungen oder zumindest eine hohe Anzahl an Stellungen zwischen AUF und ZU einnehmen können, so dass der Bremsdruck für Regel- oder Komfortbremsungen vorzugsweise stufenlos, zumindest fast stufenlos, erhöht oder vermindert werden können. Bevorzugt wird das analoge bzw. analogisierte Ventil mit einem Stromwert eingestellt.

Der Hauptbremszylinder ist bevorzugt zweikreisig und insbesondere als Tandem-Hauptzylinder (THZ) ausgebildet, der Druckmittelvorratsbehälter ist drucklos ausgebildet.

Die Fremddruckquelle weist ein Motor-Pumpen-Aggregat und einen hydraulischen Hochdruckspeicher auf. Vorzugsweise wird eine schon in einem Bremssystem vorhandene hydraulische Rückförderpumpe bzw. ein Rückförder-Motor-Pumpen-Aggregat eingesetzt.

Eine elektronische Steuer- und Regeleinheit ist vorgesehen, mittels der die analogen bzw. analogisierten Ventile geregelt bzw. gesteuert werden, zwecks Beaufschlagung des Verstärkerkolbens des hydraulischen Verstärkers mit einem bestimmten hydraulischen Druck und dass der elektronischen Steuer- und Regeleinheit eine Ermittlungseinheit zugeordnet ist oder in diese integriert, zwecks Ermittlung des Fahrerbremswunsches.

Es ist vorgesehen, dass der Hauptbremszylinder mit den Radbremsen des Fahrzeugs verbunden ist über eine Bremsleitung, in die ein Trennventil eingefügt ist, und über anschließende Bremsleitungsteile, in die jeweils ein Einlassventil angeordnet ist.

Die Radbremsen des Fahrzeugs sind mit dem Hautbremszylinder verbunden über eine Rücklaufleitung, in welche Auslassventile, ein Niederdruckspeicher und ein Umschaltventil angeordnet ist.

Die Pumpe ist eingangsseitig mit der Rücklaufleitung verbunden und ausgangsseitig über eine Verzweigungsstelle mit den Radbremsen des Fahrzeugs oder mit dem Hochdruckspeicher verbindbar und zwischen der Druckseite der Pumpe und der Verzweigungsstelle sind ein Rückschlagventil und eine Dämpferkammer angeordnet.

Es ist es vorgesehen, dass von der Verzweigungsstelle die Pumpe mit dem Hochdruckspeicher über eine Leitung verbunden ist, in die ein erstes ansteuerbares Ventil angeordnet ist, und von der Verzweigungsstelle die Pumpe mit den Bremsleitungsteilen über eine Leitung verbunden ist, in die ein weiteres ansteuerbares Ventil angeordnet ist.

Es ist vorgesehen, dass mittels der elektronischen Steuer- und Regeleinheit die ansteuerbaren Ventile geregelt bzw. gesteuert werden, zwecks Regelung eines hydraulischen Bremsdrucks oder Druckaufbaus in dem Hochdruckspeicher.

Es ist vorgesehen, dass der Pedalwegsimulator zumindest eine hydraulische Kammer aufweist, die verbunden ist mit der Leitung zwischen dem hydraulischen Verstärker über eine Leitung, in der ein weiteres Ventil, vorzugsweise ein SO-Ventil (stromlos offenes Ventil), angeordnet ist.

Ein separater Ladekreis ist für den Hochdruckspeicher vorgesehen, der insbesondere eine drei-kreisige hydraulische Pumpe aufweist, wobei ein Kreis zum Laden des Speichers dient. Dann wird die Pumpe bzw. der Ladekreis der Pumpe über eine separate Leitung mit einem Vorratsbehälter für das Druckmittel verbunden und das Ventil 1 kann entfallen. Dadurch ist die Ladung des Hochdruckspeichers vorteilhaft unabhängig von Regeltätigkeiten.

Das erste und das zweite analoge bzw. analogisierte Ventil sind stromlos geschlossene Ventile.

Der hydraulische Bremsdruckgeber, das bedeutet im wesentlichen der Verstärker und der THZ, ist in eine hydraulische Einheit, den Hydraulikblock (HCU) des Bremssystems, integriert.

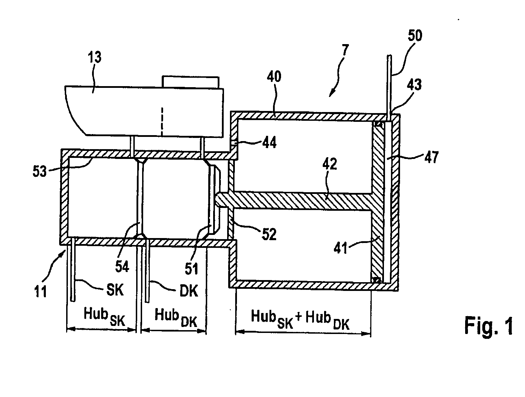

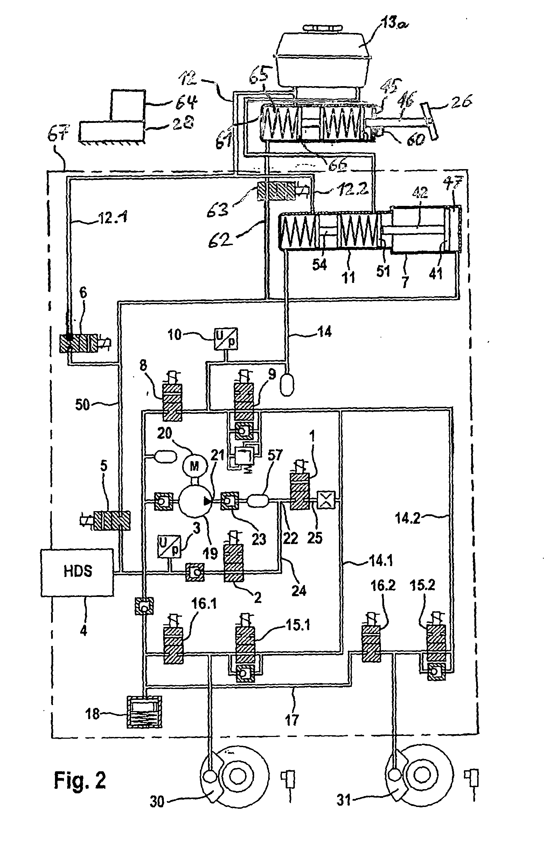

Im Folgenden wird die Erfindung anhand von Zeichnungen (Fig.1 und 2) beispielhaft näher beschrieben.

Es zeigen:

Fig.1 einen Bremsdruckgeber für das erfindungsgemäße Bremssystem

Fig.2 ein Bremssystem nach der Erfindung

Nach Fig.1 weist der Bremsdruckgeber einen hydraulischen Verstärker (7) auf, der als eine Verlängerung des Hauptbremszylinders (THZ) 11 mit Behälter 13 ausgebildet ist. Der Verstärkerkolben 41 wird in einem Verstärkergehäuse geführt, wobei sich eine Druckstange 42 des Verstärkerkolbens 41 im Kolben 51 des Druckstangenkreises des THZ 11 abstützt bzw. durch eine entsprechende scheibenartige Vergrößerung 52 des Durchmessers in der THZ-Bohrung 53 geführt wird. Das Verstärkergehäuse 40 kann als ein separates Bauteil an den THZ 11 angeflanscht werden. Aber besonders vorteilhaft wird der Verstärker (7) und der THZ (11) als eine Einheit in die bekannte hydraulische Einheit, den bekannten Hydraulikblock (HCU), integriert (siehe Fig. 2). Der Behälter 13 kann dann vorteilhaft separat, an einer geeigneten Stelle im Motorraum angeordnet werden (siehe Behälter 13a in Fig. 2). Dadurch wird die Freiheit gewährleistet, die HCU mit integrierter Verstärker-THZ-Einheit so anzuordnen, um ein optimales Packaging, eine optimale Raumausnutzung zu erzielen.

Nach der Montage des Verstärkerkolbens 41 mit Druckstange 42, oder nach der Montage der THZ-Kolben 51,54 und des Verstärkerkolbens 41 wird das Verstärkergehäuse 40 geeignet verschlossen. Hinter dem in Ruhelage befindlichen Verstärkerkolben 41 ist ein Hydraulikanschluss 43 vorgesehen, der eine Regelleitung 50 aufnimmt und in einen Raum, der hinter dem Verstärkerkolben 41 liegenden Raum 47 mündet. Auf der Seite der Druckstange 42 ist eine Entlüftungsbohrung 44 (bzw. zur Belüftung) vorgesehen. Der Verfahrweg des Verstärkerkolbens 41 entspricht dem addierten Hub bei der Kreise (Schwimmkreis SK und Druckstangenkreis DK) des THZ 11.

Das Flächenverhältnis von Verstärkerkolben 41 und THZ-Fläche, ergibt in Verbindung mit der von einer Hochdruckquelle zur Verfügung gestellten Druck, den mit Verstärkung zu erreichenden THZ-Druck (entspricht dem Aussteuerpunkt des Verstärkers).

$$(A_{verstärker}/A_{THZ}) \ *P \ HDQ \ = \ P_{THZ,verstärkt}$$

mit:

$A_{verstarker}$:      Fläche des Verstärkerkolbens
$A_{TUZ}$:      Fläche des THZ-Kolbens
$P_{HDQ}$:      Druck der Hochdruckquelle
$P_{THZ,vezstärkt}$:      THZ-Druck der mit der Verstärkung erreicht werden kann

Es ist also vorgesehen, den von einer Steuerung bzw. Regelung angeforderten Druck durch die Flächenverhältnisse oder den Druck der Hochdruckquelle zu variieren.

Vorzugsweise wird als Hochdruckquelle ein hydraulischer Hochdruckspeicher eingesetzt. Beispielsweise wird ein Hochdruck-Gasspeicher mit einem Volumen von 200 bis 300 cm$^3$ und einem Gasfülldruck von ca. 10 bis 15 bar bei 20 °C verwendet. Der Hochdruckspeicher wird vorzugsweise durch eine hydraulische Pumpe mit unter Druck stehender Bremsflüssigkeit versorgt, d.h. "geladen". Das Laden des Speichers nach einer Bremsung erfolgt zum Beispiel bei Erreichen eines hydraulischen Drucks in dem Speicher von kleiner 40 bis 50 bar, was einem Bremsdruck (Aussteuerdruck) von 80 bis 90 bar entspricht. Bis zum Erreichen eines oberen Grenzwerts für den hydraulischen Druck im Speicher von 50 bis 70 bar, entsprechend einem maximal erreichbaren Aussteuerdruck von 80 bis 110 bar, wird eine Ladezeit durch die Pumpe von ca. 2 bis 3,5 sec. benötigt, wenn eine Bremsbetätigung bis zum Aussteuerpunkt durchgeführt wurde und eine schnellstmögliche Speicherfüllung durch maximalen Pumpenlauf sichergestellt werden soll. Bei weniger starken Bremsbetätigungen und einem entsprechend geringeren Volumenstrom aus dem Hochdruckspeicher 4 werden geringere Pumpenansteuerungen, insbesondere Ansteuerungen der Pumpe bzw. des zugeordneten Motors für eine geringe Zeitdauer, z.B. im Bereich von Millisekunden, durchgeführt. Dies verlängert zwar die Ladezeit des Hochdruckspeichers, ist aber unter Komfortaspekten sinnvoll. Durch eine vorteilhafte Ansteuerung der Pumpe bzw. des Motors für einige Millisekunden ist das Pumpengeräusch für den Fahrer kaum noch wahrnehmbar. Durch diese Auslegung kann damit eine hinreichende Versorgung des hydraulischen Bremskraftverstärkers 7 gewährleistet werden, die dem heutigen Bremsanlagen mit Vakuumbremskraftverstärker entspricht.

Ein bevorzugtes Ausführungsbeispiel für das gesamte hydraulische System mit dem THZ 11 und einem angeschlossenen Bremskreis (von insgesamt zwei Bremskreisen), der auf zwei Radbremsen 30,31 einwirkt, ist in Fig.2 dargestellt. Der zweite Bremskreis für die beiden anderen Radbremsen ist in Aufbau und Funktion mit dem gezeigten Bremskreis identisch und muss daher nicht näher beschrieben werden.

Die Bremskreise werden gemäß Fig.2 von dem Hauptzylinder (THZ) 11 beaufschlagt. Der von der jeweiligen Steuerung bzw. Regelung einer elektronischen Einheit 28 in Verbindung mit einer Fahrerbremswunschermittlung 64 angeforderte Druck wird über den hydraulischen Verstärker 7 und den Hauptzylinder 11 erzeugt.

Die Radbremsen 30, 31 werden durch stromlos offene (SO) Ventile 15.1 und 15.2 direkt aus dem THZ 11 über eine Leitung 14, ein SO-Trennventil 9 und anschließende Leitungen 14.1 und 14.2 mit Druck versorgt, wobei der THZ 11 über den hydraulischen Verstärker 7 betätigt wird. Der hydraulische Verstärker 7 ist über eine Leitung 50, in die ein Ventil 5 eingefügt ist, mit hydraulischem Druck eines Hochdruckspeichers 4 beaufschlagbar. Der Hochdruckspeicher 4 wird durch eine Motor-Pumpen-Einheit 19,20 mit hydraulischem Druck versorgt. Zwischen dem Ventil 5 und der sich anschließenden Regelleitung 50 zum Verstärker 7 ist ein Abzweig über eine Leitung 62 zu einem vorzugsweise einkreisigen Pedalsimulator bzw. Pedalwegsimulator 61 vorgesehen. In der Leitung 62 ist ein Ventil 63, vorzugsweise ein SO-Ventil, eingebracht. Das Ventil 63 ist bei allen Verstärkerregelungen geschaltet, d.h. geschlossen. Nur im System-Fehlerfall bleibt dieses Ventil geöffnet und erlaubt einen direkten Druckaufbau im Verstärker.

Auf der Rückseite des Simulators 61 ist eine Öffnung 45 zur Atmosphäre vorgesehen. Die Druckstange 46 des Bremspedals 26 dringt bei einer Bremsenbetätigung in den Simulator 61 ein. Die Druckstangenbewegung wird mittels eines Wegsensors 60 aufgenommen und als Leitgröße zur Fahrerwunschbestimmung genutzt, welche dann im Verstärker 7 entsprechend umgesetzt wird. Ein Vorteil dieses Systems ist es, dass die Druckstange 46 des Bremspedals 26 nicht in Bremsflüssigkeit, sondern in Luft läuft, was eine aufwändige Abdichtung erspart.

Ein Abbau von Bremsdruck in der Radbremse wird über eine Rücklaufleitung 17 und stromlos geschlossene (SG) Ventile 16.1 und 16.2 und in den Niederdruckspeicher 18 vorgenommen, der über ein SG-Umschaltventil 8 in Verbindung steht mit dem THZ 11 über die Leitung 14.

In der Regel wird die Ladung eines Hochdruckspeichers 4 durch Öffnen eines Ventils 2 vollzogen. Dabei wird, wenn der Druck in dem Hochdruckspeicher unter einen vorgegebenen Sollwert, insbesondere unter 50 bar bis 70 bar, fällt, Bremsflüssigkeit vom THZ 11 über das offene Umschaltventil 8 und mittels der mit dem Motor 20 betriebenen Pumpe 19 angesaugt. Über ein an der Druckseite 21 der Pumpe 19 anschließendes Rückschlagventil 23, eine Dämpfungskammer 57, über eine Leitungsverzweigung 22 und eine Leitung 24, in die das Ventil 2 und ein Drucksensor 3 eingefügt sind, wird die Bremsflüssigkeit in den Hochdruckspeicher 4 gepumpt. Der Motor 20 wird dabei so lange angesteuert, bis ein vorgegebener Solldruck erreicht wird. Der Druck wird durch einen Druckaufnehmer (Drucksensor 3) gemessen. Beim Befüllen des Hochdruckspeichers 4 (Speicherladen) ist das in einer Leitung 50 zwischen Hochdruckspeicher 4 und Verstärker 7 angeordnete Ventil 5 geschlossen. Die Druckseite der Pumpe ist auch über die Verzeigung 22 und eine daran anschließende Leitung 25, in die ein Ventil 1 eingefügt ist, mit den Radbremsen 30,31 verbunden. Vorzugsweise ist das Ventil 1 stromlos geschlossen (SG-Ventil) und das Ventil 2 stromlos offen (SO-Ventil). Dann sind diese Ventile während des Speicherladens nicht bestromt, wobei vorteilhaft dann nur das Umschaltventil 8 zur Befüllung bestromt werden muss. Es ist ebenfalls möglich, das Ventil 1 als SO-Ventil und das Ventil 2 als SG-Ventil auszubilden, wobei dann die Schaltzustände entsprechend umzukehren sind.

Alternativ ist es vorgesehen, einen separaten Ladekreis für den Hochdruckspeicher 4 auszubilden. Es wird z.B. eine drei-kreisige hydraulische Pumpe verwendet, wobei ein Kreis der Pumpe zum Laden des Speichers dient. Dann wird die Pumpe bzw. der Ladekreis der Pumpe über eine separate Leitung mit dem Behälter 13a für das Druckmittel verbunden. Das Ventil 1 kann entfallen.

Bei hohen Regelfrequenzen mit geringem Volumenbedarf in der Radbremse kann das Ganze oder Teile des abgebauten Volumens zum Laden des Hochdruckspeichers 4 genutzt werden.

Wenn ein Einbremsen durch den Fahrer erkannt wird, wird der Ladevorgang des Hochdruckspeichers 4 sofort abgebrochen. Bevorzugt werden Ladevorgänge in Beschleunigungsphasen vorgenommen (ohne Regelung). Die Einbremserkennung erfolgt über den Pedalwegsensor 60 oder einen anderen, den Bremswunsch des Fahrers erfassenden Sensor und die Bremswunschermittlungseinheit 64.

Wird ein Bremswunsch ermittelt, dann wird das analog zu betreibende Ventil 5, vorzugsweise ein SG-Ventil, in Abhängigkeit von Verfahrweg der Druckstange 46 des Bremspedals 26 und/oder der Betätigungsgeschwindigkeit entsprechend geöffnet und das Ventil 63 wird geschlossen, so dass Bremsflüssigkeit von dem geladenen Hochdruckspeicher 4 in den hinter dem Verstärkerkolben liegenden Raum 47 strömen kann. Der Aufbau des Druckes im Verstärker 7 wird hierbei über den sich einstellenden Druck im THZ mit einem Drucksensor 10 überwacht. Das heißt, ein bestimmter Weg wird einem bestimmten Druck im THZ zugeordnet und eingeregelt.

Nimmt der Fahrer das Bremspedal zurück, d.h wird der Weg wieder kleiner, wird das Ventil 5 geschlossen und ein ebenfalls analog zu betreibende Ventil 6 in einer Leitung 12.1 und einer daran anschließenden Leitung 12 zwischen dem Hochdruckspeicher 4 und dem Behälter 13a wird entsprechend der Rücknahme des Fahrerwunsches analog geöffnet. Die Bremsflüssigkeit kann so über Leitung 12.1 und die daran anschließende Leitung 12 wieder in den Vorratsbehälter 13a zurückströmen. Auch zwischen dem THZ 11 und dem Vorratsbehälter 13a ist eine Leitung 12.2 vorgesehen, mit einem Anschluss an die Leitung 12, zwecks Zurückströmens von Druckmittel in den Behälter 13a.

Durch das Ventil 6 kann auch der Rest des Systems abgesperrt werden. Die Ausbildung des Ventils 6 als analogisiertes SG-Ventil reduziert den zusätzlichen Ventilaufwand auf ein Ventil, verglichen mit Systemen mit einfachem hydraulischen Verstärker, wie das in der DE 102 44 375 beschriebene System.

Die Kombination des hydraulischen Verstärkers und der Hilfsdruckquelle mit Hochdruckspeicher 4 kann so ausgelegt werden, dass der gesamte benötigte Bremsdruck durch den Verstärker erzeugt wird. Dies erhöht aber den benötigten Speicherdruck im Hochdruckspeicher 4.

Eine andere Ausführungsform sieht vor, nur einen reduzierten maximalen Bremsdruck des Verstärkers (Aussteuerdruck) zur Verfügung zu stellen (ähnlich einem Vakuum-Bremskraftverstärker). Dieser deckt dann bereits einen großen Bereich aller Bremsungen ab, z.B. alle "Normalbremsungen" in einem Bereich von maximal bis zu 60 bis 100 bar resultierendem Bremsdruck, ab. Die Bremsungen, die einen über diesen Aussteuerpunkt liegenden Bremsdruck (ca. 60-100 bar) benötigten Bereich liegen, werden dann durch zusätzlichen Druckaufbau mittels der hydraulischen Pumpe 19 aufgebaut, wie bei einer optimierten hydraulischen Bremse mit Bremskraftunterstützung durch eine hydraulische Pumpe (OHB-V). Dies kann ein "Wegziehen" des THZ-Kolbens bedingen. Dann wird über die Leitung 50 und Ventil 5 Druckmittel in den Verstärkerraum 47 geleitet und so der Kolben 41 nachgeführt. Diese Ausführungsform ist bevorzugt, da so der Bauraum weiter reduziert wird. Ein weiterer Vorteil ist darin zu sehen, dass dann nur relativ geringe Volumenströme an Bremsflüssigkeit zu bewegen sind, wodurch die Systemdynamik erhöht wird. Dies verringert auch die Ladezeiten des Hochdruckspeichers 4. Durch die zusätzliche hydraulische Unterstützung mittels Pumpe 19 kann das Volumen des Hochdruckspeichers 4 auch auf eine geringere Wiederholhäufigkeit an Bremsungen ausgelegt werden. Das bedeutet, es kann die Anzahl möglicher Bremsungen ohne zwischenzeitliche Aufladung des Hochdruckspeichers verringert werden auf z.B. 2 mal 60 bar bis 90 bar, vorzugsweise ca. 80 bar, THZ-Druck. In den seltenen Fällen einer darüber hinausgehenden Druckanforderung kann dann mittels Pumpe 19 ein entsprechender Bremsdruck erzeugt werden.

Der Simulator 61 stellt ein zylindrisches Bauteil, ähnlich eines THZ's, dar, welcher vorzugsweise nur im Sekundärkreis mit einer Manschette versehen ist. Der Sekundärkreis ist mit Bremsfluid befüllt und vorzugsweise befedert. Der vor dem Sekundärkreis befindliche Primärkreis ist vorzugsweise nicht mit einer Manschette versehen, aber vorzugsweise auch befedert. Mit diese Befederung wird das Pedalgefühl simuliert, das somit frei einstellbar ist. Wenn dieser Kreis auch mit einer Manschette versehen wird, kann das zwischengelagerte Luftpolster ebenfalls als Feder genutzt werden.

Fällt das gesamte System oder verstärkerrelevante Teile des Systems aus, dient der Simulator 61 als Rückfallebene, der den Verstärker 7 unter Druck setzen kann. Der Behälter 13a ist durch das Ventil 6, vorzugsweise SG-Ventil, vom System abgetrennt und der Simulator 61 hat über das zusätzliche Ventil 63, vorzugsweise SO-Ventil, die Möglichkeit, die Energieversorgung des Verstärkers 7 zu übernehmen. Da der Simulator 61 so nur auf den Verstärker wirkt, ist auch nur eine Einkreisigkeit des Simulators 61 erforderlich. Die Dimensionierung des Simulators 61 sowie die Befederung bestimmen die Betätigungskräfte und die mögliche Restbremswirkung bei Erschöpfung des Simulatorvolumens und können den jeweiligen Bedürfnissen entsprechend angepasst werden.

Der einfache hydraulische Verstärker 7 und der THZ 11 ist hier als hoch integrierte Ausführung in den hydraulischen Block (HCU, gestrichelte Linie 67) eingebracht, d.h. als ein Bauteil ausgeführt. Der erforderliche Ausgleichsbehälter 13a wird dabei dem Simulator 61 zugeordnet. Er ist vorzugsweise an diesem direkt oder zumindest benachbart angeordnet. Von dem Ausgleichsbehälter 13a führen zwei "Versorgungsleitungen" (12, 12.2) zum integrierten THZ 11. Über die weitere Leitung 12.1 wird der Druckabbau des Verstärkers 7 über das Ventil 6 vorgenommen. Der Ausgleichsbehälter 13a ist ebenfalls mit dem Sekundärkreis des Simulators 61 verbunden. Der Sekundärkreis hat über die Leitung 62 eine Verbindung (Fall back-Leitung) zur Regelleitung 50. In diese Fall-back-Leitung ist das Ventil 63 eingebracht.

Durch diese Konstruktion ist eine Notbetätigung des THZ 11 möglich, wenn der Verstärker 7 ausfallen sollte. Denn der Fahrer kann im Fall einer Störung oder eines Ausfalls des hydraulischen Drucks den Kolben 41 auch direkt, d.h. auf hydraulisch-mechanischem Weg, betätigen. Durch das Betätigungselement (Druckstange, 46) wird ein Simulatorkolben 66 im Simulator 61 bewegt und über das vorzugsweise stromlos offene Ventil 63 in der Verbindungsleitung 62 bzw. Fall-back-Leitung zwischen Simulator 61 und THZ 11 wird hydraulischer Druck in den Raum 47 und somit auf den Verstärkerkolben 41 übertragen.

Das beschriebene System ist besonders vorteilhaft verwendbar für elektronische Bremsenregelungssysteme, wie ABS (Antiblockiersystem), EDS (Elektronische Differential Sperre, Antriebsschlupfregelung), ESP (Elektronisches Stabilitäts Programm), HDC (Hill Descent Control, Bergabfahrtsregelung), Abstands- und Folgeregelung (ACC, Adaptive Cruise Control), HSA oder regenerative Bremse, da eine vom Fahrer unabhängige Einsteuerung von Bremsdruck möglich ist und ein automatischer Druckausgleich der Kreise durch den THZ 11 erfolgt.

**Patentansprüche**

**1.** Hydraulische Fahrzeugbremsanlage, mit einer durch ein Bremspedal (26) befätigbaren Bremsbefätigungseinrichtung (45,46,60,61,65,66), mit einem hydraulischen Bremsdruckgeber, der im wesentlichen aus einem Hauptbremszylinder (11) und einem vorgeschalteten hydraulischen Verstärker (7) besteht, mit dessen Druck Radbremsen des Fahrzeuges beaufschlagbar sind, welcher hydraulische Bremsdruckgeber über eine Leitung (12, 12.2) mit einem Druckmittelvorratsbehälter (13a) verbunden ist, welcher hydraulische Bremsdruckgeber eine im wesentlichen koaxial zum Hauptbremszylinder angeordnete Verstärkungskammer (47) und einen darin angeordneten Verstärkerkolben (41) aufweist, welcher hydraulische Bremsdruckgeber in Kraftabgaberichtung über ein Betätigungselement (42) mit einem Hauptbremszylinderkolben wirkverbunden ist und zwecks Bremskraftverstärkung mit einem hydraulischen Druck einer elektronisch ansteuerbaren Fremddruckquelle (4, 19, 20) beaufschlagbar ist, die mit dem hydraulischen Verstärker (7) über eine Leitung (50) verbunden ist, in der ein zweites analoges bzw. analogisiertes Ventil (5) angeordnet ist, wobei der Druckmittelvorratsbehälter (13a) mit der elektronisch ansteuerbaren Fremddruckquelle (4, 19, 20) über eine Leitung (12, 12.1) verbindbar ist, in der ein erstes analoges bzw. analogisiertes Ventil (6) angeordnet ist, und wobei die Fahrzeugbremsanlage einen mit der Bremsbetätigungseinrichtung (45, 46, 60, 61, 65, 65, 66) zusammenwirkenden Pedalwegsimulator (61) und eine Einrichtung zur Erkennung des Fahrerverzögerungswunsches (60, 64) aufweist und die elektronisch ansteuerbare Fremddruckquelle (4, 19, 20) nach Maßgabe des erkannten Fahrerverzögerungswunsches oder nach Maßgabe eines elektronischen Bremsenregelungssystems ansteuerbar ist und ein Motor-Pumpen-Aggregat (19, 20) und einen hydraulischen Hochdruckspeicher (4) aufweist, **dadurch gekennzeichnet, dass** die Pumpe (19) eingangsseitig mit einer von den Radbremsen (30, 31) zu dem Hauptbremszylinder (11) führenden Rücklaufleitung (17) verbunden ist und ausgangsseitig über eine Verzweigungsstelle (22) mit den Radbremsen (30,31) des Fahrzeugs oder mit dem Hochdruckspeicher (4) verbindbar ist, wobei in der Leitung (24) zwischen der Pumpe (19) und dem Hochdruckspeicher (4) und in der Leitung (25) zwischen der Pumpe (19) und den Radbremsen (30, 31) jeweils ein ansteuerbares Ventil (1, 2) angeordnet ist, die mittels einer elektronischen Steuer- und Regeleinheit (28) zur Bremsdruckregelung oder zum Aufbau eines hydraulischen Drucks in dem Hochdruckspeicher (4) geregelt bzw. gesteuert werden.

2. Hydraulische Fahrzeugbremsanlage nach Anspruch 1, **dadurch gekennzeichnet, dass** der Hauptbremszylinder (11) zweikreisig und der Druckmittelvorratsbehälter (13a) drucklos ausgebildet ist.

3. Hydraulische Fahrzeugbremsanlage nach Anspruch 1 oder 2, **dadurch gekennzeichnet, dass** die Steuer- und Regeleinheit (28) die analogen bzw. analogisierten Ventile (5, 6) zur Beaufschlagung des Verstärkerkolbens (41) des hydraulischen Verstärkers (7) mit einem bestimmten hydraulischen Druck regelt bzw. steuert, und dass der elektronischen Steuer- und Regeleinheit (28) eine Ermittlungseinheit (64) zur Ermittlung des Fahrerbremswunsches zugeordnet ist oder in diese integriert.

4. Hydraulische Fahrzeugbremsanlage nach einem der Ansprüche 1 bis 3, **dadurch gekennzeichnet, dass** der Hautbremszylinder (11) mit den Radbremsen (30, 31) des Fahrzeugs über eine Bremsleitung (14) verbunden ist, in die ein Trennventil (9) eingefügt ist, und über anschließende Bremsleitungsteile (14.1, 14.2), in die jeweils ein Einlassventil (15.1, 15.2) angeordnet ist.

5. Hydraulische Fahrzeugbremsanlage nach einem der Ansprüche 1 bis 4, **dadurch gekennzeichnet, dass** in der Rücklaufleitung (17) Auslassventile (16.1, 16.2), ein Niederdruckspeicher (18) und ein Umschaltventil (8) angeordnet sind.

6. Hydraulische Fahrzeugbremsanlage nach einem der Ansprüche 1 bis 5, **dadurch gekennzeichnet, dass** zwischen der Druckseite (21) der Pumpe (19) und der Verzweigungsstelle (22) ein Rückschlagventil (23) und eine Dämpferkammer (57) angeordnet sind.

7. Hydraulische Fahrzeugbremsanlage nach einem der Ansprüche 1 bis 6, **dadurch gekennzeichnet, dass** der Pedalwegsimulator (61) zumindest eine hydraulische Kammer (65) aufweist, die verbunden ist mit der Leitung (50) zwischen dem hydraulischen Verstärker (7) über eine Leitung (62), in der ein weiteres Ventil (63), vorzugsweise ein stromlos offenes Ventil (63), angeordnet ist.

8. Hydraulische Fahrzeugbremsanlage nach einem der Ansprüche 1 bis 7, **dadurch gekennzeichnet, dass** ein separater Ladekreis für den Hochdruckspeicher (4) vorgesehen ist, insbesondere mittels einer drei-kreisigen hydraulischen Pumpe.

9. Hydraulische Fahrzeugbremsanlage nach einem der Ansprüche 1 bis 8, **dadurch gekennzeichnet, dass** das erste und das zweite analoge bzw. analogisierte Ventil (5,6) stromlos geschlossene Ventile sind.

10. Hydraulische Fahrzeugbremsanlage nach einem der Ansprüche 1 bis 9, **dadurch gekennzeichnet, dass** der hydraulische Bremsdruckgeber im wesentlichen in eine hydraulische Einheit der Fahrzeugbremsanlage integriert ist.

## Claims

1. Hydraulic vehicle brake system including a brake operating device (45, 46, 60, 61, 65, 66) operable by a brake pedal (26), with a hydraulic brake pressure generator which essentially consists of a master brake cylinder (11) and a hydraulic booster (7) connected upstream thereof, the pressure of which can be applied to wheel brakes of the vehicle, which hydraulic brake pressure generator is connected by way of a conduit (12, 12.2) to a pressure fluid supply reservoir (13a), which hydraulic brake pressure generator includes a vacuum chamber (47) arranged essentially coaxially to the master brake cylinder as well as a booster piston (41) arranged therein, which hydraulic brake pressure generator is effectively connected to a master brake cylinder piston in the force-output direction by way of an actuating element (42) and, for the purpose of brake force boosting, can be acted upon by a hydraulic pressure of an electronically actuatable independent pressure source (4, 19, 20) which is connected to the hydraulic booster (7) by way of a conduit (50) in which a second analog or analogized valve (5) is arranged, wherein the pressure fluid supply reservoir (13a) is connectable to the electronically actuatable independent pressure source (4, 19, 20) by way of a conduit (12, 12.1) in which a first analog or analogized valve (6) is arranged, and wherein the vehicle brake system includes a pedal travel simulator (61) cooperating with the brake operating device (45, 46, 60, 61, 65, 66) and a device for detecting the driver deceleration request (60, 64), and the electronically actuatable independent pressure source (4, 19, 20) is actuatable according to the detected driver's deceleration request or according to an electronic brake control system, and a motor-and-pump assembly (19, 20) includes a hydraulic high-pressure accumulator (4), **characterized in that** on the inlet side the pump (19) is connected to a return conduit (17) that leads from the wheel brakes (30, 31) to the master brake cylinder (11), while on the outlet side it is connectable through a branching (22) to the wheel brakes (30, 31) of the vehicle or to the high-pressure accumulator (4), and each one actuatable valve (1, 2) is arranged in the conduit (24) between the pump (19) and the high-pressure accumulator (4) and in the conduit (25) between the pump (19) and the wheel brakes (30, 31), the said valves being regulated or controlled by means of an electronic controlling and regulating unit (28) for the purpose of brake pressure control or buildup of hydraulic pressure in the high-pressure accumulator (4).

2.  Hydraulic vehicle brake system as claimed in claim 1, **characterized in that** the master brake cylinder (11) has a dual-circuit design and the pressure fluid supply reservoir (13a) is unpressurized.

3.  Hydraulic vehicle brake system as claimed in claim 1 or 2, **characterized in that** the controlling and regulating unit (28) regulates or controls the analog or analogized valves (5, 6) for the purpose of applying a defined hydraulic pressure to the booster piston (41) of the hydraulic booster (7), and **in that** a determining unit (64) is associated with the electronic controlling and regulating unit (28) or is integrated into it for the purpose of determining the driver's braking request.

4.  Hydraulic vehicle brake system as claimed in any one of claims 1 to 3, **characterized in that** the master brake cylinder (11) is connected to the wheel brakes (30, 31) of the vehicle by way of a brake conduit (14) into which a separating valve (9) is inserted, and by way of subsequent brake conduit parts (14.1, 14.2) in which each one inlet valve (15.1, 15.2) is arranged.

5.  Hydraulic vehicle brake system as claimed in any one of claims 1 to 4, **characterized in that** the return conduit (17) accommodates outlet valves (16.1, 16.2), a low-pressure accumulator (18) and a change-over valve (8).

6.  Hydraulic vehicle brake system as claimed in any one of claims 1 to 5, **characterized in that** a non-return valve (23) and a damping chamber (57) are arranged between the pressure side (21) of the pump (19) and the branching (22).

7.  Hydraulic vehicle brake system as claimed in any one of claims 1 to 6, **characterized in that** the pedal travel simulator (61) includes at least one hydraulic chamber (65), which is connected to the conduit (50) between the hydraulic booster (7) by way of a conduit (62) in which an additional valve (63), preferably a NO valve (63) is arranged.

8.  Hydraulic vehicle brake system as claimed in any one of claims 1 to 7, **characterized in that** a separate charging circuit is provided for the high-pressure accumulator (4), in particular by means of a three-circuit hydraulic pump.

9.  Hydraulic vehicle brake system as claimed in any one of claims 1 to 8, **characterized in that** the first and the second analog or analogized valve (5, 6) are NC valves.

10.  Hydraulic vehicle brake system as claimed in any one of claims 1 to 9, **characterized in that** the hydraulic brake pressure generator is essentially integrated into a hydraulic unit of the vehicle brake system.

**Revendications**

1.  Système hydraulique de freinage de véhicule avec un dispositif d'actionnement de frein (45, 46, 60, 61, 65, 66) pouvant être actionné par une pédale de frein (26), avec un transmetteur de pression de freinage hydraulique qui est essentiellement constitué d'un cylindre de frein principal (11) et d'un amplificateur hydraulique (7) amont dont la pression permet d'agir sur les freins de roue du véhicule, lequel transmetteur de pression de freinage hydraulique est relié par une conduite (12, 12.2) à un réservoir de fluide sous pression (13a), lequel transmetteur de pression de freinage hydraulique comporte une chambre d'amplification (47) disposée sensiblement coaxialement au cylindre de frein principal ainsi qu'un piston d'amplificateur (41) disposé à l'intérieur, lequel transmetteur de pression de freinage hydraulique est activement relié dans le sens de fourniture d'une force à un piston de cylindre de frein principal à travers un élément d'actionnement (42), et peut être soumis, pour amplification de la force de freinage, à une pression hydraulique d'une source de pression externe (4, 19, 20) pouvant être commandée électroniquement, qui est reliée à l'amplificateur hydraulique (7) par une conduite (50) dans laquelle est disposée une seconde soupape analogique ou rendue analogique, le réservoir de fluide sous pression (13a) pouvant être relié à la source de pression externe (4, 19, 20) pouvant être commandée électroniquement par une conduite (12, 12.1) dans laquelle est disposée une première soupape (6) analogique ou rendue analogique, et le système de freinage de véhicule comportant un simulateur de course de pédale (61) coopérant avec le dispositif d'actionnement de frein (45, 46, 60, 61, 65, 66), ainsi qu'un dispositif pour reconnaître la volonté de ralentir du conducteur (60, 64), et la source de pression externe (4, 19, 20) à commande électronique pouvant être commandée en fonction de la volonté reconnue de ralentir du conducteur ou en fonction d'un système de régulation de frein électronique et comportant un groupe motopompe (19) ainsi qu'un accumulateur haute pression (4), **caractérisé en ce que** la pompe (19) est reliée côté entrée à une conduite de retour (17) menant des freins de roue (30, 31) au cylindre de frein principal (11), et pouvant être reliée côté sortie, par un point de dérivation (22), aux freins de roue (30, 31) du véhicule ou à l'accumulateur haute pression (4), dans la conduite (24) entre la pompe (19) et l'accumulateur haute pression (4) et dans la conduite (25) entre la pompe (19) et les freins de roue (30, 31) étant disposée chaque fois une soupape (1, 2) commandable qui est régulée ou commandée au moyen d'une unité électronique de commande et de régulation (28) pour la régulation de la pression de freinage ou pour constituer une pression hydraulique dans l'accumulateur haute pression (4).

2. Système hydraulique de freinage de véhicule selon la revendication 1, **caractérisé en ce que** le cylindre de frein principal (11) est à deux circuits et le réservoir de fluide sous pression (13a) est réalisé sans pression.

3. Système hydraulique de freinage de véhicule selon la revendication 1 ou 2, **caractérisé en ce que** l'unité de commande et de régulation (28) régule ou commande les soupapes (5, 6) analogiques ou rendues analogiques pour agir sur le piston d'amplificateur (41) de l'amplificateur hydraulique (7) avec une pression hydraulique déterminée, et **en ce qu'**à l'unité électronique de commande et de régulation (28) est associée une unité de détermination (64) pour déterminer la volonté de freiner du conducteur, ou est intégrée dans celle-ci.

4. Système hydraulique de freinage de véhicule selon l'une des revendications 1 à 3, **caractérisé en ce que** le cylindre de frein principal (11) est relié aux freins de roue (30, 31) du véhicule par une conduite de freinage (14) dans laquelle est insérée une soupape de séparation (9), et par des parties de conduite de freinage (14.1, 14.2) suivantes dans chacune desquelles est disposée une soupape d'admission (15.1, 15.2).

5. Système hydraulique de freinage de véhicule selon l'une des revendications 1 à 4, **caractérisé en ce que** dans la conduite de retour (17) sont disposées des soupapes d'échappement (16.1, 16.2), un accumulateur basse pression (18) et une soupape de commutation (8).

6. Système hydraulique de freinage de véhicule selon l'une des revendications 1 à 5, **caractérisé en ce qu'**un clapet de non-retour (23) et une chambre d'amortisseur (57) sont disposés entre le côté refoulement (21) de la pompe (19) et le point de dérivation (22).

7. Système hydraulique de freinage de véhicule selon l'une des revendications 1 à 6, **caractérisé en ce que** le simulateur de course de pédale (61) comporte au moins une chambre hydraulique (65) qui est reliée à la conduite (50) entre l'amplificateur hydraulique (7), par une conduite (62) dans laquelle est disposée une autre soupape (63), de préférence une soupape (63) ouverte lorsqu'elle n'est pas parcourue par un courant.

8. Système hydraulique de freinage de véhicule selon l'une des revendications 1 à 7, **caractérisé en ce qu'**il est prévu un circuit de charge séparé pour l'accumulateur haute pression (4), en particulier au moyen d'une pompe hydraulique à trois circuits.

9. Système hydraulique de freinage de véhicule selon l'une des revendications 1 à 8, **caractérisé en ce que** la première et la seconde soupape (5, 6) analogiques ou rendues analogiques sont des soupapes fermées lorsqu'elles ne sont pas parcourues par un courant.

10. Système hydraulique de freinage de véhicule selon l'une des revendications 1 à 9, **caractérisé en ce que** le transmetteur de pression de freinage hydraulique est essentiellement intégré dans une unité hydraulique du système de freinage de véhicule.

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10244375 A1
- EP 1180460 A2

- DE 10244375